# EUROPEAN PATENT APPLICATION

(11) **EP 4 790 238 A1**
(43) Date of publication of application: **12.08.2026**
(21) Application number: 26157312.5
(22) Date of filing: 09.02.2026
(51) Int. Cl.: F01D 9/06, F01D 15/10, F01D 25/12, F02K 5/00

(54) **AIR SYSTEM FOR AIRCRAFT PROPULSION SYSTEM ELECTRIC MACHINE**

(30) Priority: 07.02.2025 US 202519048381
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An aircraft propulsion system assembly includes a vane structure (150), a tail cone structure (8), an electric machine (108) and an air system (36). The vane structure (150) includes an inner platform (152), an outer platform (154) and a plurality of vanes (156A-H). Each of the vanes (156A-H) extends radially across the flowpath (52) from the inner platform (152) to the outer platform (154). The vanes (156A-H) include a first vane and a second vane. The tail cone structure (8) forms an inner peripheral boundary of the flowpath (52) downstream of the vane structure (150). The tail cone structure (8) includes an internal volume. The electric machine (108) is disposed within the internal volume. The air system (36) is configured to direct air from an air source radially outboard of the flowpath (52), radially inward across the flowpath (52) through the first vane and the second vane, into the tail cone structure (8) to cool the electric machine (108).

## Description

### BACKGROUND OF THE DISCLOSURE

### 1. Technical Field

This disclosure relates generally to an aircraft and, more particularly, to an air system for the aircraft.

### 2. Background Information

An aircraft and its propulsion system(s) may include various onboard air systems. Various types and configurations of air systems are known in the art, including air cooling systems. While these air systems have various benefits, there is still room in the art for improvement.

### SUMMARY OF THE DISCLOSURE

According to an aspect of the present disclosure, an assembly is provided for an aircraft propulsion system. This assembly includes a vane structure, a tail cone structure, an electric machine and an air system. The vane structure includes an inner platform, an outer platform and a plurality of vanes. The inner platform forms an inner peripheral boundary of a flowpath through the vane structure. The outer platform forms an outer peripheral boundary of the flowpath through the vane structure. The vanes are arranged circumferentially about an axis in an array. Each of the vanes extends radially across the flowpath from the inner platform to the outer platform. The vanes include a first vane and a second vane. The tail cone structure forms an inner peripheral boundary of the flowpath downstream of the vane structure. The tail cone structure includes an internal volume. The electric machine is disposed within the internal volume. The air system is configured to direct air from an air source radially outboard of the flowpath, radially inward across the flowpath through the first vane and the second vane while bypassing a first grouping of the vanes that are circumferentially between and next to the first vane and the second vane, into the tail cone structure to cool the electric machine.

According to another aspect of the present disclosure, another assembly is provided for an aircraft propulsion system. This assembly includes a vane structure, a tail cone structure, an electric machine and an air system. The vane structure includes an inner platform, an outer platform and a plurality of vanes. The inner platform forms an inner peripheral boundary of a flowpath through the vane structure. The outer platform forms an outer peripheral boundary of the flowpath through the vane structure. The vanes are arranged circumferentially about an axis in an array. Each of the vanes extends radially across the flowpath from the inner platform to the outer platform. The vanes include a first vane and a second vane. The first vane is disposed at a top-dead-center location circumferentially around the axis. The tail cone structure forms an inner peripheral boundary of the flowpath downstream of the vane structure. The tail cone structure includes an internal cavity. The electric machine is disposed within the internal cavity. The air system is configured to direct air from an air source radially outboard of the flowpath, radially inward across the flowpath through the second vane while bypassing the first vane, into the tail cone structure to cool the electric machine.

According to still another aspect of the present disclosure, another assembly is provided for an aircraft propulsion system. This assembly includes a vane structure, a tail cone structure, an electric machine and an air system. The vane structure includes an inner platform, an outer platform, a plurality of vanes and a first mount. The inner platform forms an inner peripheral boundary of a flowpath through the vane structure. The outer platform forms an outer peripheral boundary of the flowpath through the vane structure. The vanes are arranged circumferentially about an axis in an array. Each of the vanes extends radially across the flowpath from the inner platform to the outer platform. The vanes include a first vane and a second vane. The first mount is connected to the outer platform and circumferentially aligned with the first vane. The first mount is configured for securing the vane structure to a pylon structure. The tail cone structure forms an inner peripheral boundary of the flowpath downstream of the vane structure. The tail cone structure includes an internal cavity. The electric machine is disposed within the internal cavity. The air system is configured to direct air from an air source radially outboard of the flowpath, radially inward across the flowpath through the second vane while bypassing the first vane, into the tail cone structure to cool the electric machine.

The electric machine may be configurable as an electric motor during a motor mode of operation.

The electric machine may be configurable as an electric generator during a generator mode of operation.

The assembly may also include a compressor section, a combustor section, a turbine section and a rotating structure. The flowpath may extend through the compressor section, the combustor section and the turbine section from an airflow inlet to a combustion products exhaust disposed along the tail cone structure. The rotating structure may include a bladed rotor disposed in the compressor section or the turbine section. The electric machine may include an electric machine rotor operatively coupled to the rotating structure.

The air system may be configured to direct the air into the internal volume to impinge against and/or flow around and convectively cool the electric machine.

The air system may include a nozzle configured to direct the air into the tail cone structure to cool the electric machine. The nozzle may be axially aligned with and radially inboard of the vane structure.

The air system may include a first air circuit projecting radially across the flowpath through the first vane. A first circuit inlet into the first air circuit may be fluidly coupled to the air source.

The assembly may include a nacelle structure radially outboard of and covering the vane structure. The nacelle structure may form a peripheral boundary of the air source axially along the nacelle structure.

The assembly may also include an engine core. The engine core may include a compressor section, a combustor section and a turbine section. The flowpath may be a core flowpath. The core flowpath may extend through the compressor section, the combustor section and the turbine section. The air source may include a bypass flowpath that bypasses the engine core.

The air source may be an environment external to the aircraft propulsion system.

The first circuit inlet may be configured as or otherwise include a flush mounted scoop.

The first circuit inlet may be configured as or otherwise include a raised scoop.

The air system may also include a second air circuit projecting radially across the flowpath through the second vane. A second circuit inlet into the second air circuit may be fluidly coupled to the air source.

One vane in the first grouping of the vanes may be disposed at a top-dead-center location circumferentially around the axis.

The first grouping of the vanes may include at least (or only) three of the vanes.

The tail cone structure may include a sidewall and a heat shield radially between the sidewall and the electric machine.

The assembly may also include a pylon structure mounted to the vane structure through a plurality of mounts connected to the outer platform. Each vane in the first grouping of the vanes may be circumferentially aligned with a respective one of the mounts.

The vanes may also include a third vane. The second vane may be circumferentially between and next to the first grouping of the vanes and the third vane. The air system may also be configured to direct the air from the air source, radially inward across the flowpath through the third vane, into the tail cone structure.

The vanes may be divided into the first grouping of the vanes and a second grouping of the vanes. The second grouping of the vanes may include the first vane and the second vane. The air system may be configured to direct the air from the air source, radially inward across the flowpath through each vane in the second grouping of the vanes, into the tail cone structure.

A first quantity of vanes in the first grouping of the vanes may be equal to or less than a second quantity of vanes in the second grouping of the vanes.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system with a ducted propulsor rotor.
FIG. 2 is a schematic illustration of a portion of the aircraft propulsion system with an electric machine system.
FIG. 3 is a schematic illustration of a portion of the aircraft propulsion system with an air system.
FIG. 4 is a schematic end view illustration of a portion of the aircraft propulsion system with a stator vane structure mounted to a pylon structure.
FIGS. 5 and 6 are sectional illustrations of a portion of the aircraft propulsion system with various air scoop arrangements.
FIG. 7 is a partial schematic illustration of the aircraft propulsion system with an open propulsor rotor.

### DETAILED DESCRIPTION

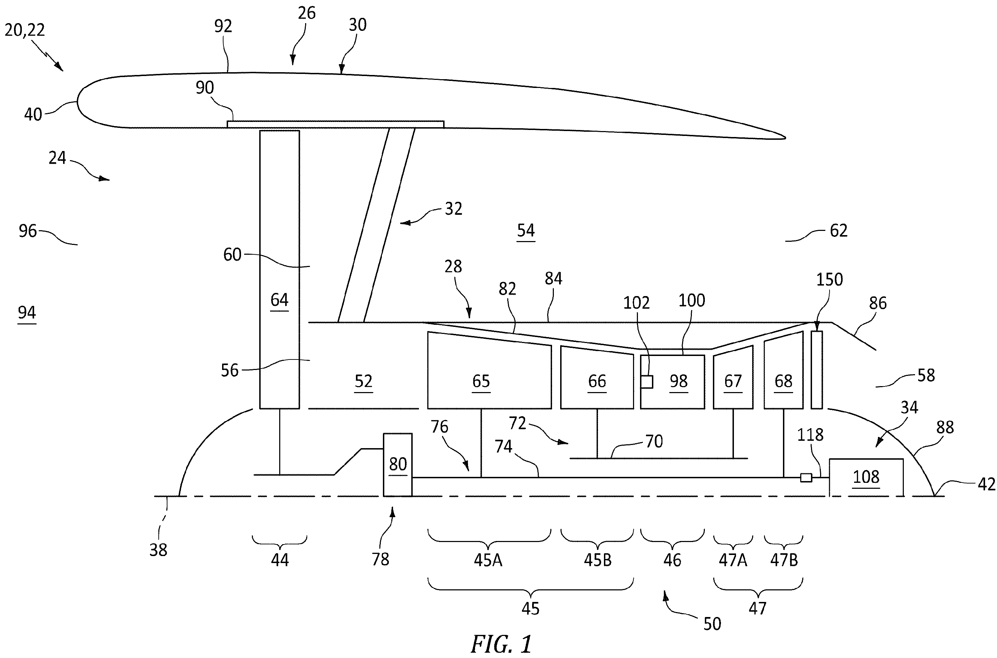

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

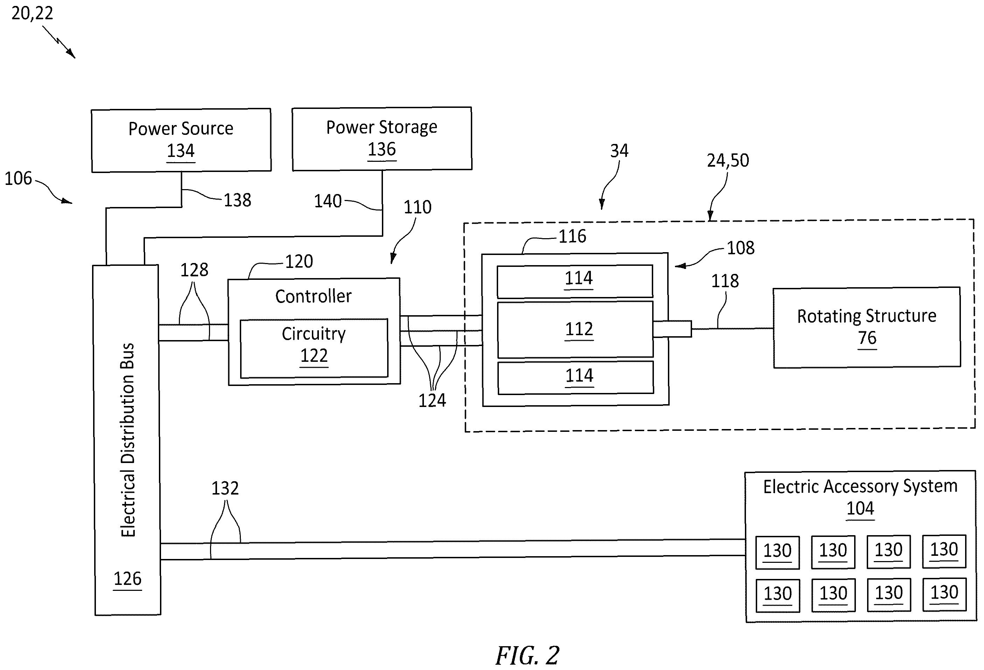

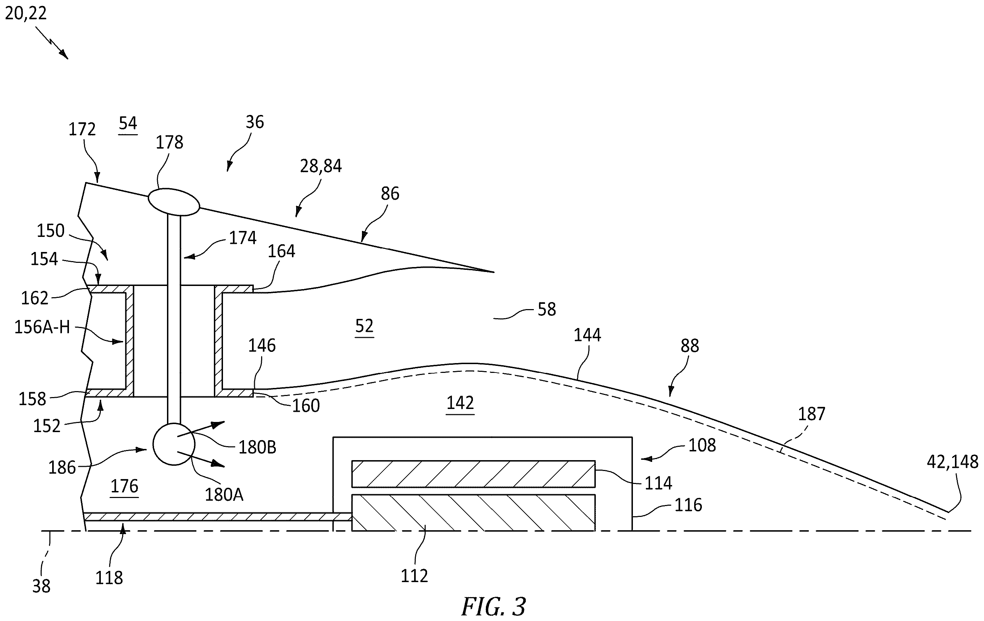

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and an air system 36 (see FIG. 3). The aircraft propulsion system 22 extends axially along an axis 38 between an axial upstream, forward end 40 of the aircraft propulsion system 22 and an axial downstream, aft end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. At least (or only) the LPC section 45A, the HPC section 45B, the combustor section 46, the HPT section 47A and the LPT section 47B collectively form a core 50 (e.g., a gas generator) of the turbine engine 24. The aircraft propulsion system 22 and its turbine engine 24 of FIG. 1 also include a core flowpath 52 (e.g., an annular core flowpath) and a bypass flowpath 54 (e.g., an annular bypass flowpath). The core flowpath 52 extends sequentially through the LPC section 45A, the HPC section 45B, the combustor section 46, the HPT section 47A and the LPT section 47B from an airflow inlet 56 into the core flowpath 52 to a combustion products exhaust 58 out from the core flowpath 52. The bypass flowpath 54 extends through a bypass duct from an airflow inlet 60 into the bypass flowpath 54 to an airflow exhaust 62 from the bypass flowpath 54, where the bypass duct may be formed by the inner housing structure 28 and the outer housing structure 30. The bypass flowpath 54 and its bypass duct are configured to bypass (e.g., are disposed radially outboard of and extend along) the engine core 50 and the inner housing structure 28.

The propulsor section 44, the LPC section 45A, the HPC section 45B, the combustor section 46, the HPT section 47A and the LPT section 47B may be arranged sequentially along the propulsion system axis 38 within the propulsion system housing 26. The propulsor section 44 includes a bladed propulsor rotor 64; e.g., a fan rotor. The LPC section 45A includes a bladed low pressure compressor (LPC) rotor 65. The HPC section 45B includes a bladed high pressure compressor (HPC) rotor 66. The HPT section 47A includes a bladed high pressure turbine (HPT) rotor 67. The LPT section 47B includes a bladed low pressure turbine (LPT) rotor 68. Each of these engine rotors 64-68 includes a rotor base (e.g., a disk or a hub) and a plurality of rotor blades (e.g., airfoils, vanes, etc.). The rotor blades may be arranged into one or more stages axially along the respective engine rotor 64-68. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 66 is coupled to and rotatable with the HPT rotor 67. The HPC rotor 66 of FIG. 1, for example, is connected to the HPT rotor 67 through a high speed shaft 70. At least (or only) the HPC rotor 66, the HPT rotor 67 and the high speed shaft 70 collectively form a high speed rotating structure 72; e.g., a high speed spool of the turbine engine 24 and its engine core 50. This high speed rotating structure 72 of FIG. 1 and its members 66, 67 and 70 are rotatable about the propulsion system axis 38. However, it is contemplated the high speed rotating structure 72 may alternatively be rotatable about another axis radially and/or angularly offset from the rotational axis of the propulsor rotor 64 and/or the centerline axis of the turbine engine 24.

The LPC rotor 65 is coupled to and rotatable with the LPT rotor 68. The LPC rotor 65 of FIG. 1, for example, is connected to the LPT rotor 68 through a low speed shaft 74. At least (or only) the LPC rotor 65, the LPT rotor 68 and the low speed shaft 74 collectively form a low speed rotating structure 76; e.g., a low speed spool of the turbine engine 24 and its engine core 50. This low speed rotating structure 76 of FIG. 1 and its members 65, 68 and 74 are rotatable about the propulsion system axis 38. However, it is contemplated the low speed rotating structure 76 may alternatively be rotatable about another axis radially and/or angularly offset from the rotational axis of the propulsor rotor 64 and/or the centerline axis of the turbine engine 24.

The low speed rotating structure 76 is coupled to the propulsor rotor 64 through a drivetrain 78. The drivetrain 78 may be configured as a geared drivetrain, where a geartrain 80 (e.g., a transmission, a speed change device, an epicyclic geartrain, etc.) is disposed between and operatively couples the propulsor rotor 64 to the low speed rotating structure 76 and its LPT rotor 68. With this arrangement, the propulsor rotor 64 may rotate at a different (e.g., slower) rotational speed than the low speed rotating structure 76 and its LPT rotor 68. Here, the propulsor rotor 64 and the low speed rotating structure 76 may rotate in a common (the same) direction about the propulsion system axis 38 or in opposite directions about the propulsion system axis 38 depending, for example, upon the specific configuration of the geartrain 80. Alternatively, the drivetrain 78 may be configured as a direct-drive drivetrain, where the geartrain 80 is omitted. With such an arrangement, the propulsor rotor 64 rotates at a common (the same) rotational speed as the low speed rotating structure 76 and its LPT rotor 68.

The inner housing structure 28 of FIG. 1 includes an inner case 82 (e.g., a core case) for the turbine engine 24 and an inner nacelle structure 84 (sometimes referred to as an inner fixed structure (IFS)). The inner case 82 is disposed radially outboard of, extends axially along and may circumscribe one or more or all of the engine sections 45A-47B and the engine rotors 65-68. The inner case 82 may thereby house and provide a support structure for the respective engine sections 45A-47B and the engine rotors 65-68. The inner nacelle structure 84 is configured to provide an aerodynamic cover over the engine core 50 and its inner case 82. At least (or only) the inner housing structure 28 and its inner nacelle structure 84 may collectively form a radial inner peripheral boundary of the bypass flowpath 54. A downstream / aft portion of the inner housing structure 28 such as, for example, a (e.g., tubular) core exhaust nozzle 86 of the inner nacelle structure 84 also covers at least a portion of a tail cone structure 88; e.g., an (e.g., conical) exhaust center body. More particularly, the inner nacelle structure 84 and its exhaust nozzle 86 axially overlap and extend circumferentially about (e.g., completely around) the tail cone structure 88. The exhaust nozzle 86 and the tail cone structure 88 of FIG. 1 (see also FIG. 3) collectively form a downstream / aft portion of the core flowpath 52 and its core exhaust 58.

The outer housing structure 30 of FIG. 1 includes an outer case 90 (e.g., a fan case) for the turbine engine 24 and an outer nacelle structure 92. The outer case 90 is disposed radially outboard of, extends axially along and may circumscribe the propulsor section 44 and its propulsor rotor 64. The outer case 90 may thereby house and may be configured as a containment structure for the propulsor section 44 and its propulsor rotor 64. The outer nacelle structure 92 is configured to provide an aerodynamic cover over the outer case 90. At least (or only) the outer housing structure 30 and its outer nacelle structure 92 may collectively form a radial outer peripheral boundary of the bypass flowpath 54.

During operation of the aircraft propulsion system 22 of FIG. 1, ambient air from an environment 94 external to the aircraft and its aircraft propulsion system 22 enters the aircraft propulsion system 22 and its turbine engine 24 through an airflow inlet 96. This air is propelled by the rotating propulsor rotor 64 in a downstream, aft direction towards the propulsion system aft end 42.

An outer stream of the air propelled by the rotating propulsor rotor 64 is directed into the bypass flowpath 54 through its bypass inlet 60, which air entering the bypass flowpath 54 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 62 to provide forward thrust. The propulsion of the bypass air may account for a majority of the forward thrust generated by the aircraft propulsion system 22 and its turbine engine 24 of FIG. 1.

An inner stream of the air propelled by the rotating propulsor rotor 64 is directed into the core flowpath 52 through its core inlet 56, which air entering the core flowpath 52 may be referred to as "core air". This core air is compressed by the LPC rotor 65 and the HPC rotor 66 and is directed into a combustion chamber 98 (e.g., annular combustion chamber) of a combustor 100 (e.g., annular combustor) in the combustor section 46. Fuel is injected into the combustion chamber 98 by one or more fuel injectors 102 and mixed with the compressed core air to provide a fuel-air mixture. This fuel-air mixture is ignited and combustion products thereof flow through and sequentially drive rotation of the HPT rotor 67 and the LPT rotor 68. The rotation of the HPT rotor 67 and the LPT rotor 68 respectively drive rotation of the HPC rotor 66 and the LPC rotor 65 and, thus, compression of the air received from the core inlet 56. The rotation of the LPT rotor 68 also drives rotation of the propulsor rotor 64 through the drivetrain 78.

Referring to FIG. 2, the electric machine system 34 is electrically coupled to an optional electric accessory system 104 and an electrical system 106 for the aircraft and its aircraft propulsion system 22. The electric machine system 34 of FIG. 2 includes at least (or only) one electric machine 108 and an electric machine (EM) controller 110 for the electric machine 108. For ease of description, the electric machine 108 of FIG. 2 is described below as being electrically coupled to, controlled by and/or otherwise associated with a single, dedicated EM controller 110. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine.

The electric machine 108 of FIG. 2 includes an electric machine rotor 112, an electric machine stator 114 and an electric machine housing 116; e.g., a case. The machine rotor 112 is rotatable about a rotational axis of the machine rotor 112, which rotational axis may also be an axial centerline of the electric machine 108. The machine stator 114 of FIG. 2 is radially outboard of and circumscribes the machine rotor 112. With this arrangement, each electric machine 108 is configured as a radial flux electric machine. The electric machine 108 of the present disclosure, however, is not limited to such an exemplary rotor-stator configuration nor to radial flux arrangements. The machine rotor 112, for example, may alternatively be radially outboard of and circumscribe the machine stator 114. In another example, the machine rotor 112 may be axially next to the machine stator 114 configuring the electric machine 108 as an axial flux electric machine. Referring again to FIG. 2, the machine rotor 112 and the machine stator 114 are at least partially or completely housed within an interior of the machine housing 116.

The electric machine 108 may be operatively coupled to a respective one of the engine rotating structures 72, 76 (see FIG. 1). The machine rotor 112 of FIG. 2, for example, is mechanically coupled to and rotatable with the low speed rotating structure 76 at least or only through a drivetrain 118. This drivetrain 118 may be configured as or otherwise include a shaft, a gearbox, and/or the like.

The electric machine 108 of FIG. 2 may be configurable as an electric motor and/or an electric generator; e.g., an electric motor-generator. For example, during a motor mode of operation, the electric machine 108 may operate as the electric motor to convert electricity received from the aircraft electrical system 106 into mechanical power. The machine stator 114, for example, may generate an electromagnetic field with the machine rotor 112 using a current of electricity received from the aircraft electrical system 106 through the EM controller 110. This electromagnetic field may drive rotation of the machine rotor 112. The machine rotor 112, in turn, may provide mechanical power to and drive rotation of the low speed rotating structure 76 through the respective drivetrain 118. This mechanical power may be provided to boost power or completely power the rotation of the low speed rotating structure 76. By contrast, during a generator mode of operation, the electric machine 108 may operate as the electric generator to convert mechanical power received from the low speed rotating structure 76 into electricity. Rotation of the machine rotor 112, for example, may be rotationally driven by rotation of the low speed rotating structure 76 through the drivetrain 118. The rotation of the machine rotor 112 may generate an electromagnetic field with the machine stator 114, and the machine stator 114 may convert energy from the electromagnetic field into electricity. The electric machine 108 may then provide a current of electricity to the aircraft electrical system 106 through the EM controller 110 for storage and/or further use. The electric machine 108 of the present disclosure, however, is not limited to such exemplary operation. For example, the electric machine 108 may alternatively be configured as a dedicated electric generator; e.g., without the electric motor functionality. In another example, the electric machine 108 may alternatively be configured as a dedicated electric motor; e.g., without the electric generator functionality.

The EM controller 110 includes a controller housing 120 and internal controller circuitry 122. The controller housing 120 may be configured as an enclosed case (e.g., a closed or sealed container) for the respective controller circuitry 122. The controller circuitry 122 is disposed within an interior of the controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 110 is electrically coupled to the electric machine 108 through one or more electric cables 124; e.g., high voltage electric cables, power feeder cables, etc. More particularly, the controller circuitry 122 of the EM controller 110 is electrically coupled to the electric machine 108 and its machine stator 114 through the electric cables 124. Similarly, the EM controller 110 is electrically coupled to an electrical distribution bus 126 of the aircraft electrical system 106 through one or more electric cables 128; e.g., high voltage electric cables, power feeder cables, etc. More particularly, the controller circuitry 122 of the EM controller 110 is electrically coupled to the aircraft electrical system 106 and its electrical distribution bus 126 through the respective electric cables 128.

The EM controller 110 and its controller circuitry 122 are configured to control operation of the electric machine 108. For example, when operating as the electric motor, the EM controller 110 and its controller circuitry 122 are configured to regulate a flow of electricity from the aircraft electrical system 106 to the electric machine 108. This electricity flow regulation may include: (a) turning-on the flow of electricity from the aircraft electrical system 106 to the electric machine 108 (e.g., electrically coupling the electric machine 108 to the aircraft electrical system 106); (b) turning-off the flow of electricity from the aircraft electrical system 106 to the electric machine 108 (e.g., electrically decoupling the electric machine 108 from the aircraft electrical system 106); (c) moderating the flow of electricity from the aircraft electrical system 106 to the electric machine 108. Here, the EM controller 110 operates as a motor controller. In another example, when operating as the electric generator, the EM controller 110 and its controller circuitry 122 are configured to regulate a flow of electricity from the electric machine 108 to the aircraft electrical system 106. This electricity flow regulation may include: (a) turning-on the flow of electricity from the electric machine 108 to the aircraft electrical system 106 (e.g., electrically coupling the electric machine 108 to the aircraft electrical system 106); (b) turning-off the flow of electricity from the electric machine 108 to the aircraft electrical system 106 (e.g., electrically decoupling the electric machine 108 from the aircraft electrical system 106); (c) moderating the flow of electricity from the electric machine 108 to the aircraft electrical system 106. Here, the EM controller 110 operates as a generator controller.

The electric accessory system 104 includes one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 of FIG. 2 may be configured as part of one or more sub-systems for the aircraft propulsion system 22 and its turbine engine 24. Examples of these sub-systems include, but are not limited to: a fuel system for delivering the fuel to the fuel injectors 102 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 130 is electrically coupled to the electrical distribution bus 126 of the aircraft electrical system 106 through one or more electric cables 132 (collectively schematically shown); e.g., high voltage electric cables, low voltage electric cables, power feeder cables, etc. Each electric device 130 may thereby receive a current of electricity from the aircraft electrical system 106 to power operation thereof.

The aircraft electrical system 106 includes the electrical distribution bus 126. This aircraft electrical system 106 may also include a power source 134 and/or a power storage 136. The electrical distribution bus 126 is electrically coupled to the electric machine 108 through its EM controller 110. The electrical distribution bus 126 is electrically coupled to each of the electric devices 130. The electrical distribution bus 126 is also electrically coupled to the power source 134 and the power storage 136, respectively schematically shown via lines 138 and 140. With this arrangement, the electrical distribution bus 126 provides an intermediate connection between the various electrical aircraft propulsion system members 108 (via 110), 130, 134 and/or 136. The power source 134 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 136 is configured to receive electricity from the electrical distribution bus 126 for storage. The power storage 136 is also configured to provide the stored electricity to the electrical distribution bus 126. The power storage 136, for example, may be configured as or otherwise include one or more electricity storage devices; e.g., batteries, super capacitors, etc. With the foregoing aircraft electrical system 106 arrangement, the electrical current provided to one, some or all of the electric devices 130 may be received, through the electrical distribution bus 126, from any one, some or all of the electrical aircraft propulsion system members 108, 134 and/or 136.

Referring to FIG. 3, the electric machine 108 is disposed at least partially or completely within an internal volume 142 (e.g., a cavity, a chamber, etc.) of the tail cone structure 88. A radial outer periphery of this tail cone volume 142 may be at least partially or completely formed by a sidewall 144 of the tail cone structure 88. The tail cone sidewall 144 of FIG. 3, for example, is spaced radially outboard from the electric machine 108. The tail cone sidewall 144 extends axially along the propulsion system axis 38 from an upstream, forward end 146 of the tail cone structure 88 to a downstream, aft end 148 of the tail cone structure 88; e.g., a trailing end / tip of the tail cone structure 88. The tail cone sidewall 144 extends circumferentially around the propulsion system axis 38, providing the tail cone structure 88 and its tail cone sidewall 144 with a full-hoop (e.g., generally conical) body. The tail cone structure 88 and its tail cone sidewall 144 of FIG. 3 thereby axially overlap and circumscribe the electric machine 108 disposed within its tail cone volume 142.

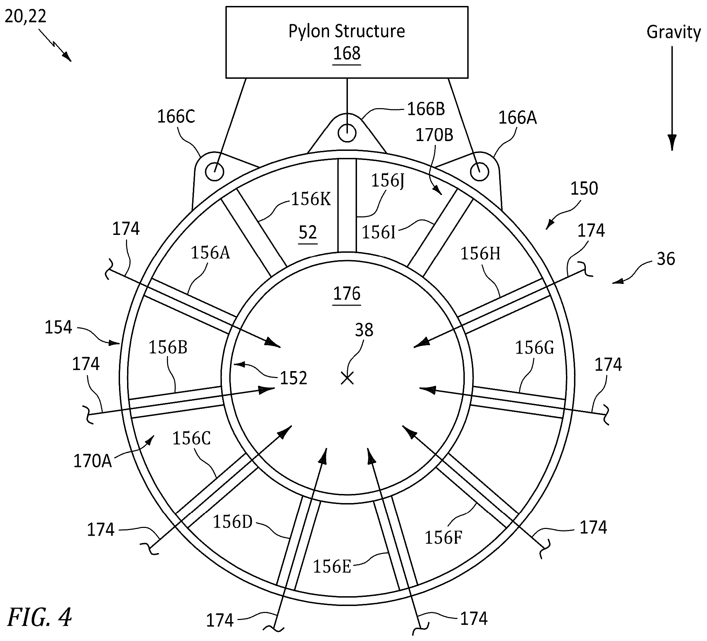

The tail cone structure 88 of FIG. 3 is disposed axially next to (along the propulsion system axis 38) and downstream of (along the core flowpath 52) a stator vane structure 150 of the turbine engine 24. The tail cone structure 88 may also be mounted to the stator vane structure 150. This stator vane structure 150 may be configured as or otherwise include a turbine exhaust case (TEC) for the turbine engine 24 and its turbine section 47 (see FIG. 1). The stator vane structure 150 of FIGS. 3 and 4, for example, includes a radial inner platform 152, a radial outer platform 154 and a plurality of stator vanes 156A-H (generally referred to as "156"); e.g., aerodynamic struts, nozzle vanes, exit guide vanes, etc.

Referring to FIG. 3, the vane structure inner platform 152 extends axially along the propulsion system axis 38 from an upstream, forward end 158 of the vane structure inner platform 152 to a downstream, aft end 160 of the vane structure inner platform 152. The vane structure inner platform 152 extends circumferentially around the propulsion system axis 38, providing the vane structure inner platform 152 with a full-hoop (e.g., tubular) body. The vane structure inner platform 152 thereby forms a radial inner peripheral boundary of a section of the core flowpath 52 which extends longitudinally through the stator vane structure 150. This inner peripheral boundary of the core flowpath 52 may be adjacent to and substantially or completely flush with a radial inner peripheral boundary of a downstream section of the core flowpath 52 which extends longitudinally along the tail cone structure 88 to the core exhaust 58.

The vane structure outer platform 154 is spaced radially outboard from the vane structure inner platform 152. The vane structure outer platform 154 extends axially along the propulsion system axis 38 from an upstream, forward end 162 of the vane structure outer platform 154 to a downstream, aft end 164 of the vane structure outer platform 154. The vane structure outer platform 154 extends circumferentially around the propulsion system axis 38, providing the vane structure outer platform 154 with a full-hoop (e.g., tubular) body. The vane structure outer platform 154 thereby forms a radial outer peripheral boundary of the section of the core flowpath 52 which extends longitudinally through the stator vane structure 150. This outer peripheral boundary of the core flowpath 52 may be adjacent to and substantially or completely flush with a radial outer peripheral boundary of the downstream section of the core flowpath 52 which extends longitudinally along the exhaust nozzle 86 to the core exhaust 58.

Referring to FIG. 4, the vane structure outer platform 154 is configured with one or more propulsion system mounts 166A-C (generally referred to as "166"). These mounts 166 are arranged circumferentially about the propulsion system axis 38 and the vane structure outer platform 154 in an arcuate array. Each of these mounts 166 is connected to the vane structure outer platform 154. Each mount 166, for example, may be formed integral with or attached (e.g., mechanically fastened, bonded, etc.) to the vane structure outer platform 154. Each mount 166 projects radially out from the vane structure outer platform 154 and may include one or more mounting tabs. The mounts 166 of FIG. 4 are configured to facilitate attaching a pylon structure 168 to the stator vane structure 150. Briefly, this pylon structure 168 is configured to mount the aircraft propulsion system 22 to a component of an airframe of the aircraft; e.g., an aircraft wing, an aircraft fuselage, etc.

The stator vanes 156 are arranged and may (or may not) be equispaced circumferentially about the propulsion system axis 38 in an annular array; e.g., a circular array. Each stator vane 156 is connected to the vane structure inner platform 152 and the vane structure outer platform 154. Each stator vane 156, for example, may be formed integral with or attached (e.g., mechanically fastened, bonded, etc.) to the vane structure inner platform 152 and the vane structure outer platform 154. Each stator vane 156 projects spanwise out from the vane structure inner platform 152, radially across the core flowpath 52, to the vane structure outer platform 154.

The stator vanes 156 may be arranged into one or more groupings 170A and 170B (generally referred to as "170"). Each of these groupings 170 may include one or more of the stator vanes 156. The air system grouping 170A of FIG. 4, for example, includes a set of the stators vanes 156A-H. This air system grouping 170A and its air system stator vanes 156A-H are associated with the air system 36 (see FIG. 3) as described below in further detail. The mounting system grouping 170B of FIG. 4 includes a set of the stator vanes 156I-K. This mounting system grouping 170B and its mounting system stator vanes 156I-K are associated with the mounts 166 attaching the pylon structure 168 to the stator vane structure 150 and, more generally, the turbine engine 24 (see FIG. 1). Each mounting system stator vane 156I-K of FIG. 4, for example, is circumferentially and/or axially aligned with a respective one of the mounts 166. Each mounting system stator vane 156I-K may thereby transfer a structural load radially from the vane structure inner platform 152, through the vane structure outer platform 154, to the respective mount 166A-C.

The air system stator vane 156A defines a first end of the air system grouping 170A. The air system stator vane 156H defines a second end of the air system grouping 170A that is circumferentially opposite the air system grouping first end. Within the air system grouping 170A, each of the air system stator vanes 156B-G is disposed circumferentially between and next to a respective neighboring pair of the air system stator vanes 156A-H. Here, the mounting system grouping 170B and its mounting system stator vanes 156I-K are located circumferentially between and disposed next to the air system stator vane 156A at the air system grouping first end and the air system stator vane 156H at the air system grouping second end.

The mounting system stator vane 156I defines a first end of the mounting system grouping 170B. The mounting system stator vane 156K defines a second end of the mounting system grouping 170B that is circumferentially opposite the mounting system grouping first end. The mounting system stator vane 156J is disposed circumferentially between and next to its neighboring pair of the mounting system stator vanes 156I and 156K. Here, the air system grouping 170A and its air system stator vanes 156A-H are located circumferentially between and disposed next to the mounting system stator vane 156I at the mounting system grouping first end and mounting system stator vane 156K at the mounting system grouping second end. In the specific arrangement of FIG. 4, the mounting system stator vane 156J may be located at a top-dead-center location circumferentially about the propulsion system axis 38. Briefly, at this top-dead-center location, a ray projecting radially outward from the propulsion system axis 38 is parallel with and opposite to a gravitational force direction when, for example, the aircraft is flying in (or close to) level flight and/or the aircraft is on ground. The present disclosure, however, is not limited to such an exemplary arrangement. For example, the mounting system stator vane may be located at a side location circumferentially about the propulsion system axis 38 where, for example, the aircraft propulsion system 22 is mounted to a side of the aircraft fuselage by the pylon structure 168.

A quantity of the air system stator vanes 156A-H included in the air system grouping 170A may be equal to or greater than a quantity of the mounting system stator vanes 156I-K included in the mounting system grouping 170B. The air system grouping 170A of FIG. 4, for example, includes eight (8) of the air system stator vanes 156A-H and the mounting system grouping 170B includes three (3) of the mounting system stator vanes 156I-K. The present disclosure, however, is not limited to such an exemplary arrangement. For example, the quantity of the air system stator vanes 156A-H included in the air system grouping 170A may alternatively be less than the quantity of the mounting system stator vanes 156I-K included in the mounting system grouping 170B.

Referring to FIG. 3, the stator vane structure 150 is disposed radially inboard of the inner nacelle structure 84. A sidewall 172 of the inner nacelle structure 84, for example, is spaced radially outboard of the stator vane structure 150 and its vane structure outer platform 154. This nacelle sidewall 172 extends axially along the propulsion system axis 38 to the exhaust nozzle 86. The nacelle sidewall 172 extends circumferentially about (e.g., partially or completely around) the propulsion system axis 38. The nacelle sidewall 172 of FIG. 3 thereby axially overlaps and extends at least partially circumferentially around the stator vane structure 150 and its vane structure outer platform 154.

The air system 36 is configured to provide pressurized air for air cooling the electric machine 108. The air system 36 of FIG. 3, for example, is configured to direct the pressurized air bled from the bypass flowpath 54, radially inward (toward the propulsion system axis 38) across the core flowpath 52, into the tail cone structure 88 for air cooling the electric machine 108.

The air system 36 includes one or more air circuits 174; see also FIG. 4. Each air circuit 174 of FIG. 3 is configured as an airflow passage fluidly coupling the bypass flowpath 54 to the tail cone volume 142, for example through an internal volume 176 (e.g., an inner bore) of the stator vane structure 150. Each air circuit 174, for example, extends longitudinally from an airflow inlet 178 into the respective air circuit 174 to one or more airflow outlets 180A and 180B (generally referred to as "180") from the respective air circuit 174. More particularly, each air circuit 174 extends longitudinally from the respective circuit inlet 178, radially inward across the stator vane structure 150 and the core flowpath 52 through a respective one of the air system stator vanes 156A-H (see also FIG. 4), to the respective circuit outlets 180. Referring to FIG. 4, each air circuit 174 may be uniquely associated with a respective one of the air system stator vanes 156A-H. By contrast, none of the air circuits 174 may extend through any of the mounting system stator vanes 156I-K. The air system 36 and its air circuits 174 of FIG. 4 may thereby bypass the mounting system grouping 170B and its mounting system stator vanes 156I-K.

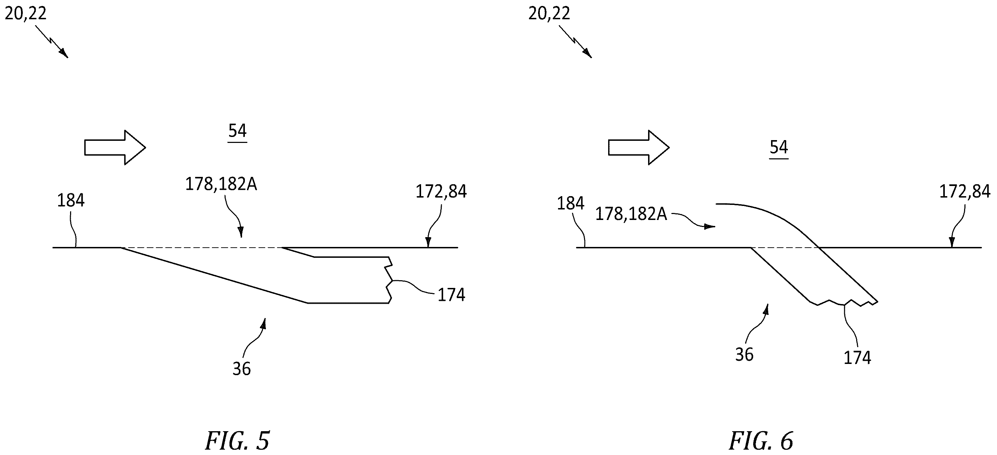

Referring to FIG. 3, each circuit inlet 178 may be disposed along the bypass flowpath 54. Each circuit inlet 178 may also be axially and/or circumferentially aligned with the respective air system stator vane 156A-H through which that air circuit 174 extends. Each circuit inlet 178 may be configured as an air scoop configured to direct (e.g., bleed) a portion of the bypass air out of the bypass flowpath 54 and into the respective air circuit 174. For example, referring to FIG. 5, each circuit inlet 178 may be configured as a flush mounted scoop; e.g., a NACA scoop or otherwise. This circuit inlet 178 of FIG. 5, for example, is configured as an air scoop 182A which flush with an aerodynamic flow surface 184 of the inner nacelle structure 84 and its nacelle sidewall 172. In another example, referring to FIG. 6, each circuit inlet 178 may be configured as a raised scoop; e.g., a ram-air scoop or otherwise. This circuit inlet 178 of FIG. 6, for example, is configured as an air scoop 182B which projects radially out into the bypass flowpath 54 from the aerodynamic flow surface 184 of the inner nacelle structure 84 and its nacelle sidewall 172. The present disclosure, however, is not limited to such exemplary circuit inlet configurations. For example, in other embodiments, one or more of the circuit inlets 178 may alternatively be configured as a bleed port or an array of bleed ports. Moreover, while the circuit inlet 178 of FIGS. 3, 5 and 6 are illustrated along the inner peripheral boundary of the bypass flowpath 54, it is contemplated the circuit inlet 178 may be otherwise located in and/or along the bypass flowpath 54. For example, it is contemplated the circuit inlet 178 for at least one of the air circuits 174 may be disposed on and/or along a bifurcation. Moreover, while each air circuit 174 is described above with a dedicated circuit inlet 178, it is contemplated some or all of the air circuits 174 may alternatively share one or more common circuit inlets through a manifold or otherwise.

Referring to FIG. 3, the circuit outlets 180 for each air circuit 174 may be formed by and pierce a nozzle 186 dedicated to that respective air circuit 174. Each nozzle 186 may be located in the vane structure volume 176 and axially and/or circumferentially aligned with the respective air system stator vane 156A-H through which the respective air circuit 174 extends. Each nozzle 186 may be configured to direct one or more jets of the pressurized air out of the respective air circuit 174, through its circuit outlets 180, into the tail cone volume 142. Moreover, the circuit outlets 180 may be arranged in a showerhead pattern to direct the pressurized air jets to various locations in the tail cone volume 142. For example, one of the circuit outlets (e.g., 180A) may be configured to direct its pressurized air jet towards (e.g., to impinge against) the electric machine 108. Another one of the circuit outlets (e.g., 180B) may be configured to direct its pressurized air jet along a side of the electric machine 108. The present disclosure, however, is not limited to such an exemplary nozzle configuration. For example, one, some or all of the nozzles 186 may alternatively be disposed in the tail cone volume 142. In another example, one, some or all of the nozzles 186 may also or alternatively be replaced by fluid couplings into an interior of the electric machine 108.

During operation of the air system 36 of FIG. 3, the air system 36 bleeds bypass air from the bypass flowpath 54 and directs that pressurized air into the air circuits 174. Each air circuit 174 directs the pressurized air radially inward across the stator vane structure 150 and the core flowpath 52, through the respective air system stator vane 156A-H, to the respective nozzle 186. Each nozzle 186 directs the pressurized air out of the respective air circuit 174 and into the tail cone volume 142 for air cooling (e.g., impingement cooling and/or convectively cooling) the electric machine 108. The pressurized air may provide an insulative buffer between the relatively hot tail cone sidewall 144 and the electric machine 108. The pressurized air may also cool the tail cone sidewall 144 which is exposed to the relative hot combustion products flowing to and being exhausted out from the core exhaust 58.

In some embodiments, the bypass flowpath 54 may be configured as an air source for the air system 36 as described above. However, it is contemplated the air system 36 and its air circuit(s) 174 may alternatively be fluidly coupled to and receive the pressurized air from one or more other air sources. For example, it is contemplated the air system 36 and its air circuit(s) 174 may alternatively (or also) receive the pressurized air from another flowpath within the aircraft propulsion system 22; e.g., the core flowpath 52 of FIG. 1 or otherwise. In another example, it is contemplated the air system 36 and its air circuit(s) 174 may alternatively (or also) receive the pressurized air from outside of the aircraft propulsion system 22; e.g., the air source may be configured as the external environment 94.

In some embodiments, referring to FIG. 3, the tail cone structure 88 may be configured as a single walled structure (without dashed line heat shield 187). In other embodiments, the tail cone structure 88 may also include a heat shield 187 between the tail cone sidewall 144 and the electric machine 108. This heat shield 187 of FIG. 3 is spaced radially outboard from and may overlap the electric machine 108. The heat shield 187, for example, may axially and circumferentially line an interior of the tail cone sidewall 144. The heat shield 187 may also extend axially along and circumscribe the electric machine 108.

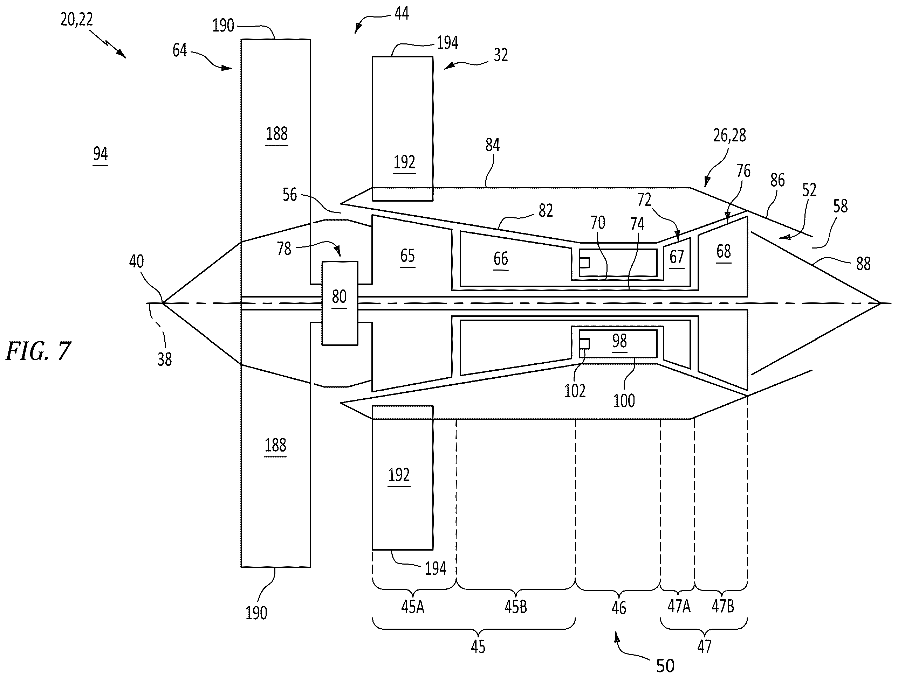

The aircraft propulsion system 22 of FIG. 1 is described above as a ducted propulsor propulsion system; e.g., the turbofan propulsion system. The present disclosure, however, is not limited to such an exemplary aircraft propulsion system. For example, referring to FIG. 7, the outer housing structure 30 (see FIG. 1) may be omitted from the propulsion system housing 26 to open the propulsor rotor 64 up to the external environment 94. More particularly, the propulsor rotor 64 of FIG. 7 includes a plurality of open propulsor blades 188 arranged circumferentially about the propulsion system axis 38 in an array; e.g., a circular array. This array of the propulsor blades 188 may be unshrouded or alternatively shrouded by a tubular propulsor rotor shroud dedicated to the propulsor rotor 64 for example. Each of these propulsor blades 188 projects spanwise (e.g., radially) out from a base of the propulsor rotor 64, into the external environment 94, to a distal tip 190 of the respective propulsor blade 188. Each propulsor blade 188 is thereby configured as an un-ducted propulsor blade which is exposed to (e.g., disposed in) the surrounding external environment 94. With this arrangement, the propulsor rotor 64 is an open propulsor rotor (e.g., an un-ducted propulsor rotor) and the aircraft propulsion system 22 is configured as an open rotor propulsion system. Moreover, the inner housing structure 28 and its nacelle structure may form an exterior of the aircraft propulsion system 22 and may border the external environment 94.

The guide vane structure 32 may also be open to the external environment 94 forming an open guide vane structure. This guide vane structure 32 of FIG. 7 includes a plurality of open exit guide vanes 192; e.g., airfoils. The guide vanes 192 are arranged and may (or may not) be equispaced circumferentially about the propulsion system axis 38 in an array; e.g., a circular array. This array of the guide vanes 192 may be unshrouded or alternatively shrouded by a tubular guide vane shroud dedicated to the guide vane structure 32 for example. This guide vane structure 32 and its guide vanes 192 are arranged axially next to (e.g., adjacent) the propulsor rotor 64 and its propulsor blades 188. The guide vane structure 32 and its guide vanes 192 of FIG. 7, for example, are arranged downstream of the propulsor rotor 64 and its propulsor blades 188, without (e.g., any) other elements axially therebetween to obstruct, turn and/or otherwise influence the air propelled by the propulsor rotor 64 to the guide vane structure 32. Each of the guide vanes 192 projects radially out from an exterior surface of the inner housing structure 28, into the external environment 94, to a distal tip 194 of the respective guide vane 192. Each guide vane 192 is thereby configured as an un-ducted guide vane which is exposed to (e.g., disposed in) the surrounding external environment 94. With the foregoing arrangement, the guide vane structure 32 and its guide vanes 192 are configured to condition (e.g., straighten out, de-swirl, etc.) an outer stream of air propelled by the propulsor rotor 64 within the external environment 94 that bypass the engine core 50. Of course, in other embodiments, the guide vane structure 32 may be omitted where, for example, the aircraft propulsion system 22 is alternatively configured as a counter-rotating open rotor (CROR) aircraft propulsion system, etc.

While the turbine engine 24 in FIG. 1 and FIG. 7 is shown with a particular two rotating structure arrangement, the present disclosure is not limited thereto. For example, the LPC rotor 65 may be omitted to configure the LPT rotor 68 as a power turbine (PT) rotor for the propulsor rotor 64. In another example, the turbine engine 24 may also include another rotating structure; e.g., an intermediate speed spool for the turbine engine 24 and its engine core 50.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system, comprising:
a vane structure including an inner platform, an outer platform and a plurality of vanes, the inner platform forming an inner peripheral boundary of a flowpath through the vane structure, the outer platform forming an outer peripheral boundary of the flowpath through the vane structure, the plurality of vanes arranged circumferentially about an axis in an array, each of the plurality of vanes extending radially across the flowpath from the inner platform to the outer platform, and the plurality of vanes including a first vane and a second vane;
a tail cone structure forming an inner peripheral boundary of the flowpath downstream of the vane structure, the tail cone structure comprising an internal volume;
an electric machine disposed within the internal volume; and
an air system configured to direct air from an air source radially outboard of the flowpath, radially inward across the flowpath through the first vane and the second vane while bypassing a first grouping of the plurality of vanes that are circumferentially between and next to the first vane and the second vane, into the tail cone structure to cool the electric machine.

2. The assembly of claim 1, wherein the electric machine is configurable as an electric motor during a motor mode of operation; and/or wherein the electric machine is configurable as an electric generator during a generator mode of operation.

3. The assembly of claim 1 or 2, comprising:
a compressor section, a combustor section and a turbine section, the flowpath extending through the compressor section, the combustor section and the turbine section from an airflow inlet to a combustion products exhaust disposed along the tail cone structure; and
a rotating structure comprising a bladed rotor disposed in the compressor section or the turbine section, the electric machine comprising an electric machine rotor operatively coupled to the rotating structure.

4. The assembly of claim 1, 2 or 3, wherein the air system is configured to direct the air into the internal volume to impinge against and/or flow around and convectively cool the electric machine.

5. The assembly of any preceding claim, wherein
the air system comprises a nozzle configured to direct the air into the tail cone structure to cool the electric machine; and
the nozzle is axially aligned with and radially inboard of the vane structure.

6. The assembly of any preceding claim, wherein the air system comprises a first air circuit projecting radially across the flowpath through the first vane, and a first circuit inlet into the first air circuit is fluidly coupled to the air source;
optionally, wherein the first circuit inlet comprises a flush mounted scoop or a raised scoop.

7. The assembly of claim 6, wherein the air system further comprises a second air circuit projecting radially across the flowpath through the second vane, and a second circuit inlet into the second air circuit is fluidly coupled to the air source.

8. The assembly of any preceding claim, further comprising:
a nacelle structure radially outboard of and covering the vane structure;
the nacelle structure forming a peripheral boundary of the air source axially along the nacelle structure.

9. The assembly of any preceding claim, comprising an engine core including a compressor section, a combustor section and a turbine section, wherein
the flowpath is a core flowpath, and the core flowpath extends through the compressor section, the combustor section and the turbine section; and
the air source comprises a bypass flowpath that bypasses the engine core.

10. The assembly of any preceding claim, wherein the air source is an environment external to the aircraft propulsion system.

11. The assembly of any preceding claim, wherein one vane in the first grouping of the plurality of vanes is disposed at a top-dead-center location circumferentially around the axis.

12. The assembly of any preceding claim, wherein the tail cone structure includes a sidewall and a heat shield radially between the sidewall and the electric machine.

13. The assembly of any preceding claim, further comprising:
a pylon structure mounted to the vane structure through a plurality of mounts connected to the outer platform;
each vane in the first grouping of the plurality of vanes circumferentially aligned with a respective one of the plurality of mounts.

14. The assembly of any preceding claim, wherein either:
(i) the plurality of vanes further includes a third vane; the second vane is circumferentially between and next to the first grouping of the plurality of vanes and the third vane; and the air system is further configured to direct the air from the air source, radially inward across the flowpath through the third vane, into the tail cone structure; or
(ii) the plurality of vanes are divided into the first grouping of the plurality of vanes and a second grouping of the plurality of vanes; the second grouping of the plurality of vanes includes the first vane and the second vane; and the air system is configured to direct the air from the air source, radially inward across the flowpath through each vane in the second grouping of the plurality of vanes, into the tail cone structure.

15. An assembly for an aircraft propulsion system, comprising:
a vane structure including an inner platform, an outer platform and a plurality of vanes, the inner platform forming an inner peripheral boundary of a flowpath through the vane structure, the outer platform forming an outer peripheral boundary of the flowpath through the vane structure, the plurality of vanes arranged circumferentially about an axis in an array, each of the plurality of vanes extending radially across the flowpath from the inner platform to the outer platform, the plurality of vanes including a first vane and a second vane, and wherein either: (i) the first vane is disposed at a top-dead-center location circumferentially around the axis; or (ii) the assembly comprises a first mount connected to the outer platform and circumferentially aligned with the first vane, where the first mount is configured for securing the vane structure to a pylon structure;
a tail cone structure forming an inner peripheral boundary of the flowpath downstream of the vane structure, the tail cone structure comprising an internal cavity;
an electric machine disposed within the internal cavity; and
an air system configured to direct air from an air source radially outboard of the flowpath, radially inward across the flowpath through the second vane while bypassing the first vane, into the tail cone structure to cool the electric machine.
